# EUROPÄISCHE PATENTSCHRIFT

(11) **EP 1 904 881 B1**
(45) Veröffentlichungstag und Bekanntmachung des Hinweises auf die Patenterteilung: **08.09.2010**
(21) Anmeldenummer: 06762411.4
(22) Anmeldetag: 05.07.2006
(51) Int. Cl.: G02B 6/44

(54) **LICHTWELLENLEITERVERTEILEREINRICHTUNG**
OPTICAL FIBER DISTRIBUTION DEVICE
DISPOSITIF DE DISTRIBUTION DE FIBRES OPTIQUES

(30) Priorität: 21.07.2005 DE 202005011461 U
(43) Veröffentlichungstag der Anmeldung: 02.04.2008
(73) Patentinhaber: CCS Technology, Inc., Wilmington, DE 19803 (US)
(72) Erfinder: FRÖHLICH, Franz-Friedrich, 58091 Hagen (DE); WINTERHOFF, Hans, 79761 Waldshut (DE)
(74) Vertreter: Sturm, Christoph
(86) Internationale Anmeldenummer: PCT/EP2006/006540
(87) Internationale Veröffentlichungsnummer: WO 2007/009593

(56) Entgegenhaltungen:
- WO-A-91/05281
- DE-C1- 4 231 181
- DE-U1-202004 017 493
- FR-A1- 2 682 775
- FR-A1- 2 723 487
- US-A- 5 071 220
- US-B1- 6 253 016

## Beschreibung

Die Erfindung betrifft eine Lichtwellenleiterverteilereinrichtung nach dem Oberbegriff des Anspruchs 1.

In Verteilerschränken für Lichtwellenleiterkabel kommen Verteilereinrichtungen zum Einsatz, wie sie zum Beispiel aus dem Produktkatalog "Zubehör für LWL-Kabelnetze, Ausgabe 2, Seite 227, Jahr 2002, Coming Cable Systems GmbH & Co. KG" bekannt sind. Die dort gezeigte Lichtwellenleiterverteilereinrichtung dient insbesondere der Handhabung von mit Steckern vorkonfektionierten Lichtwellenleiterkabeln, wie zum Beispiel Patchcords oder Pigtails, wobei die dort gezeigte Lichtwellenleiterverteilereinrichtung ein in einem Gehäuse schubladenartig montiertes bzw. gelagertes Verteilerfeld aufweist. Das Verteilerfeld der dort gezeigten Verteilereinrichtung verfügt über Führungselemente für Lichtwellenleiter, Kupplungen für Stecker der vorkonfektionierten Lichtwellenleiter, Zugabfangungen für in das Verteilerfeld einzuführende Lichtwellenleiterkabel sowie Ablagen für Spleiße von miteinander verspleißten Lichtwellenleitern, wobei die oben aufgeführten Elemente bzw. Bauteile allesamt als Einzelteile ausgeführt und mit einem Trägerelement des Verteilerfelds verbunden sind.

Zur Reduzierung der benötigten Einzelteile ist es aus der DE 20 2004 017 493 bereits bekannt, die Führungselemente für die Lichtwellenleiter und/oder die Kupplungen für die Stecker der vorkonfektionierten Lichtwellenleiter und/oder die Ablagen für die Spleiße von miteinander verspleißten Lichtwellenleitern und/oder die Zugabfangungen für in das Verteilerfeld einzuführende Lichtwellenleiterkabel als integralen Bestandteil des Verteilerfelds auszuführen, wobei das Verteilerfeld zusammen mit den obigen Elementen als monolithische Einheit aus Kunststoff, nämlich als Kunststoff-Spritzgussteii, ausgebildet ist.

Hiervon ausgehend liegt der vorliegende Erfindung das Problem zu Grunde, eine neuartige Lichtwellenleiterverteilereinrichtung zu schaffen.

Das der Erfindung zu Grunde liegende Problem wird durch eine Lichtwellenleiterverteilereinrichtung mit den Merkmalen des Anspruches 1 gelöst.

Die vorkonfektionierten Lichtwellenleiter sowie die über das oder jedes Lichtwellenleiterkabel eingeführten Lichtwellenleiter sind innerhalb des Verteilerfelds kreuzungsfrei geführt.

Bevorzugte Weiterbildungen der Erfindung ergeben sich aus den Unteransprüchen und der nachfolgenden Beschreibung. Ausführungsbeispiele werden anband der Zeichnung näher erläutert. In der Zeichnung zeigt:
- Fig. 1:: eine erfindungsgemäße Lichtwellenleiterverteilereinrichtung in per- spektivischer Ansicht;
- Fig. 2:: das Detail II der Lichtwellenleiterverteilereinrichtung gemäß Fig. 1; und
- Fig. 3:: das Detail II der Fig. 2 in einer zweiten Ansicht.

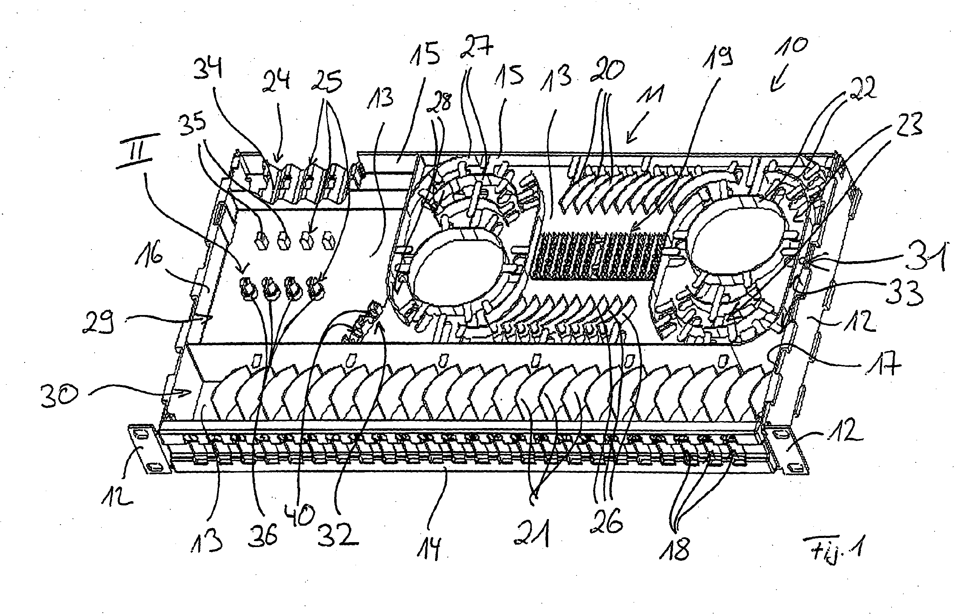

Nachfolgend wird die hier vorliegende Erfindung unter Bezugsnahme auf Fig. 1 bis 3 in größerem Detail beschrieben.

Fig. 1 zeigt ein bevorzugtes Ausführungsbeispiel einer erfindungsgemäßen Lichtwellenleiterverteilereinrichtung 10 in perspektivischer Draufsicht, wobei die Lichtwellenleiterverteilereinrichtung 10 ein Verteilerfeld 11 umfasst, welches über Halteelemente bzw. über sogenannte Haltewinkel 12 an einem Rahmen zum Beispiel eines Verteilerschranks schubladenartig montiert bzw. gelagert werden kann.

Das Verteilerfeld 11 verfügt im gezeigten Ausführungsbeispiel über eine Bodenwand 13 sowie vier Seitenwände 14, 15, 16 und 17, wobei die Seitenwand 14 eine Vorderwand des Verteilerfelds 11 und die Seitenwand 15 eine Rückwand des Verteilerfelds 11 bildet. Die Haltewinkel 12 greifen an den Seitenwänden 16 und 17 des Verteilerfelds 11 an, wobei eine translatorische Relativbewegung zwischen dem Verteilerfeld 11 und den Haltewinkeln 12 zur schubladeartigen Führung desselben möglich ist.

Wie Fig. 1 entnommen werden kann, sind in die als Vorderwand ausgebildete Seitenwand 14 des Verteilerfelds 11 Ausnehmungen bzw. Öffnungen 18 integriert, in welche nicht-dargestellte Kupplungen für nicht-dargestellte Stecker eingesetzt bzw. eingerastet werden können. An dieser Stelle sei darauf hingewiesen, dass derartige Kupplungen auch integraler Bestandteil der Vorderwand 14 des Verteilerfelds 11 sein können.

Das Verteilerfeld 11 der in Fig. 1 dargestellten Lichtwellenleiterverteilereinrichtung 10 dient in erster Linie der Handhabung bzw. Ablage von Spleißen, die zwischen einseitig mit Steckern vorkonfektionierten Lichtwellenleitern und über ein Lichtwellenleiterkabel in das Verteilerfeld 11 eingeführten Lichtwellenleitern ausgebildet sind. Einseitig mit Stecker vorkonfektionierte Lichtwellenleiter werden auch als Pigtails bezeichnet. Die Spleiße zwischen den vorkonfektionierten Lichtwellenleitern und den über ein Lichtwellenleiterkabel in das Verteilerfeld 11 eingeführten Lichtwellenleitern finden Aufnahme in Ablagen 19 für die Spleiße, wobei die Ablagen 19 integraler Bestandteil des als Kunststoff-Spritzgussteil ausgeführten Verteilerfelds 11 sind.

Die steckerlosen Enden der einseitig mit Steckern vorkonfektionierten Lichtwellenleiter sind den Ablagen 19 über Führungselemente 20 unter Einhaltung zulässiger Mindestbiegeradien für die Lichtwellenleiter zuführbar. Ebenso sind die mit Steckern vorkonfektionierten Enden der vorkonfektionierten Lichtwellenleiter über Führungen 21, die benachbart zur Vorderwand 14 des Verteilerfelds 11 angeordnet sind, unter Einhaltung zulässiger Mindestbiegeradien den nicht-dargestellten Kupplungen für die Stecker zuführbar, wobei die nicht-dargestellten Kupplungen in den Öffnungen 18 der Vorderwand 14 Aufnahme finden. Zwischen den Führungselementen 20 und 21 sind weitere Führungselemente 22 für die vorkonfektionierten Lichtwellenleiter positioniert, die einen Überlängenspeicher 23 für die vorkonfektionierten Lichtwellenleiter bilden.

In das Verteilerfeld 11 der in Fig. 1 dargestellten Lichtwellenleiterverteilereinrichtung 10 ist mindestens ein Lichtwellenkabel mit darin geführten Lichtwellenleitern einführbar, nämlich über eine in die Rückwand 15 des Verteilerfelds 11 integrierte Öffnung 24. Zur Zugabfangung der in das Verteilerfeld 11 eingeführten Lichtwellenleiterkabel verfügt das Verteilerfeld 11 über Zugabfangungen 25 für das Lichtwellenleiterkabel, wobei über das jeweilige Lichtwellenleiterkabel in das Verteilerfeld 11 eingeführte Lichtwellenleiter über Führungselemente 26 den Ablagen 19 für die Spleiße unter Einhaltung zulässiger Mindestbiegeradien für die Lichtwellenleiter zuführbar sind. Weitere Führungselemente 27 für die über ein Lichtwellenleiterkabel in das Verteilerfeld 11 eingeführten Lichtwellenleiter bilden einen Überlängenspeicher 28 für dieselben.

Wie bereits erwähnt, sind die Ablagen 19 für Spleiße zwischen den vorkonfektionierten Lichtwellenleitern und den über ein Lichtwellenleiterkabel in das Verteilerfeld 11 eingeführten Lichtwellenleitern integraler Bestandteil des als Kunststoff-Spritzgussteil ausgebildeten Verteilerfelds 11. Gleiches für die Führungselemente 20, 21, 22, 26, 27 und damit die Überlängenspeicher 23, 28 sowie die Zugabfangungen 25. Nach einer besonders bevorzugten Variante sind auch die nicht-dargestellten Kupplungen für die Stecker der vorkonfektionierten Lichtwellenleiter, die im gezeigten Ausführungsbeispiel Aufnahme in den Ausnehmungen 18 der Vorderwand 14 des Verteilerfelds 11 finden, integraler Bestandteil des als Kunststoff-Spritzgussteil ausgeführten Verteilerfelds 11.

Wie Fig. 1 entnommen werden kann, sind die Zugabfangungen 25, die Ablagen 19 sowie die Führungselemente 20, 21, 22, 26, 27 derart im Verteilerfeld 11 positioniert, dass das Verteilerfeld 11 mindestens drei räumlich voneinander getrennte Funktionsbereiche 29, 30 und 31 aufweist. Ein erster Funktionsbereich 29 dient der Einführung und Zugabfangung mindestens eines Lichtwellenleiterkabels in das Verteilerfeld 11 und umfasst demnach die Zugabfangungen 25. Ein zweiter Funktionsbereich 30 dient der Führung der vorkonfektionierten Lichtwellenleiter an die nicht-dargestellten Kupplungen für die Stecker derselben und umfasst demnach die Führungselemente 21. Ein dritter Funktionsbereich 31 dient der Führung der vorkonfektionierten Lichtwellenleiter sowie der über das oder jedes Lichtwellenleiterkabel in das Verteilerfeld 11 eingeführten Lichtwellenleiter im Bereich der Spleiße sowie der Ablage 19 für die Spleiße, und umfasst demnach die Ablagen 19, die Führungselemente 20,22, 26 und 27 und damit auch die Überlängenspeicher 23 und 28. Dabei sind, wie Fig. 1 entnommen werden kann, die drei Funktionsbereiche 29, 30 und 31 derart räumlich voneinander getrennt im Verteilerfeld 11 angeordnet, dass die vorkonfektionierten Lichtwellenleiter sowie die über das oder jedes Lichtwellenleiterkabel in das Verteilerfeld 11 eingeführten Lichtwellenleiter innerhalb des Verteilerfelds 11 kreuzungsfrei geführt werden können. Durch die kreuzungsfreie Führung der vorkonfektionierten Lichtwellenleiter sowie der Lichtwellenleiter der Lichtwellenleiterkabel können einzelne Lichtwellenleiter bei Installationsarbeiten am Verteilerfeld leichter ermittelt sowie leichter gehandhabt werden.

Wie Fig. 1 entnommen werden kann, ist der zweite Funktionsbereich 30 benachbart zur Vorderwand 14 und damit benachbart zu einer Vorderseite des Verteilerfelds 11 positioniert. Der erste Funktionsbereich 29 sowie der dritte Funktionsbereich 31 sind jeweils benachbart zur Rückwand 15 und damit einer Rückseite des Verteilerfelds 11 angeordnet. Über Lichtwellenleiterkabel in das Verteilerfeld 11 einzuführende Lichtwellenleiter sind über eine zwischen dem ersten Funktionsbereich 29 und dem dritten Funktionsbereich 31 positionierte Durchführung 32 ausgehend vom ersten Funktionsbereich 29 in den dritten Funktionsbereich 31 überführbar. Eine weitere Durchführung 33 ist zwischen dem zweiten Funktionsbereich 30 und dem dritten Funktionsbereich 31 ausgeführt, um vorkonfektionierte Lichtwellenleiter zwischen dem zweiten Funktionsbereich 30 und dem dritten Funktionsbereich 33 zu überführen.

Im Verteilerfeld 11 der erfindungsgemäßen Lichtwellenleiterverteilereinrichtung 10 sind demnach vorkonfektionierte Lichtwellenleiter, die auch als Pigtailfasern bezeichnet werden können, sowie über mindestens ein Lichtwellenleiterkabel in das Verteilerfeld eingeführte Lichtwellenleiter, die auch als Kabelfasern bezeichnet werden können, in unterschiedlichen, räumlich getrennten Funktionsbereichen handhabbar und innerhalb des Verteilerfelds 11 kreuzungsfrei führbar. So sind für die Pigtailfasern sowie für die Kabelfasern getrennte Führungselemente sowie getrennte Überlängenspeicher vorhanden. Hierdurch wird die Handhabung von Lichtwellenleitern, nämlich der Pigtailfasern sowie der Kabelfasern, innerhalb des Verteilerfelds 11 deutlich vereinfacht.

Wie bereits erwähnt, sind in den ersten Funktionsbereich 29 des Verteilerfelds 11 Zugabfangungen 25 für in das Verteilerfeld 11 einzuführende Lichtwellenleiterkabel integriert. Die Zugabfangungen 25 verfügen dabei über erste Abfangelemente 34 für einen Kabelmantel eines in das Verteilerfeld 11 einzuführenden Lichtwellenleiterkabels, wobei die ersten Abfangelemente 34 im gezeigten Ausführungsbeispiel als prismenförmige Aufnahmen ausgebildet sind, in welche ein Lichtwellenleiterkabel mit seinem Kabelmantel eingelegt wird und an welchen das Lichtwellenleiterkabel über einen Kabelbinder befestigt wird.

Neben den ersten Abfangelementen 34 umfassen die Zugabfangungen 25 weiterhin zweite Abfangelemente 35 für ein Zentralelement eines einzuführenden Lichtwellenleiterkabels.

Ferner verfügen die Zugabfangungen 25 über dritte Abfangelemente 36, an welchen in den Kabelmantel eines einzuführenden Lichtwellenleiterkabels integrierte Zugelemente abgefangen werden können. Bei solchen in einen Kabelmantel integrierte Zugelemente handelt es sich um als Keflarfasern bzw. Aranidfasern ausgebildete Zugfasern, die an den dritten Abgangelementen 36 abgefangen werden können.

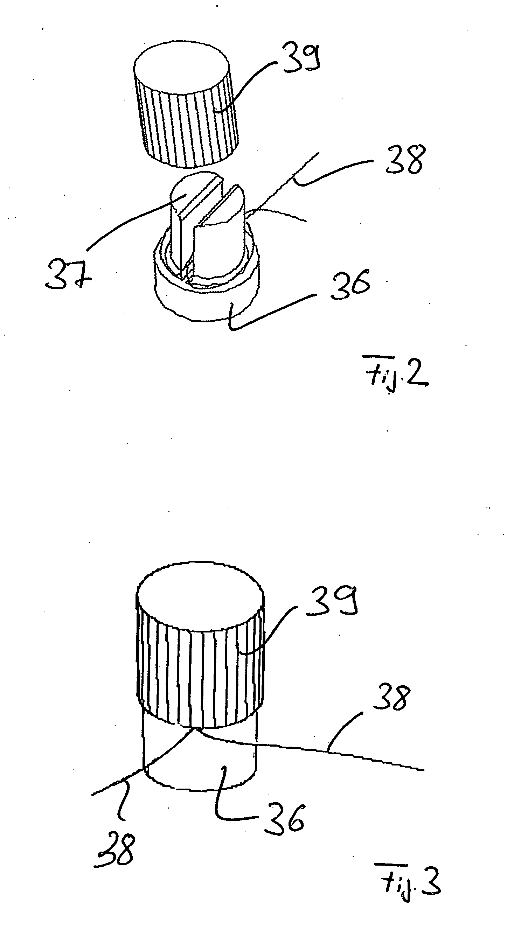

Fig. 2 und 3 zeigen ein solches drittes Abfangelement 36 des Verteilerfelds 11 der Fig. 1 in Alleindarstellung, wobei das dritte Abfangelement 36 einen geschlitzten, stabförmigen Befestigungsabschnitt 37 für in einen Kabelmantel eines einzuführenden Lichtwellenleiterkabels integrierte Keflarfasern 38 aufweist. Die Keflarfasern 38 können um den geschlitzten, stabförmigen Befestigungsabschnitt 37 gewickelt sowie in dieser gewickelten Position am Befestigungsabschnitt 37 verknotet werden. Zur weiteren Positionssicherung der Keflarfasern 38 im Bereich des dritten Abfangelements 36 dient eine Kappe 39, die über den Befestigungsabschnitt 37 geschoben werden kann.

Innerhalb eines in das Verteilerfeld 11 einzuführenden Lichtwellenleiterkabels können Gruppen von Lichtwellenleitern zu sogenannten Bündeladern zusammengefasst sein, die von einer Bündeladerhülle umgeben sind. Im Ausführungsbeispiel der Fig. 1 sind im Bereich der Durchführung 32 zwischen dem ersten Funktionsbereich 29 und dem dritten Funktionsbereich 31 Abfangelemente 40 für derartige Bündeladern positioniert.

Die Abfangelemente 40 für die Bündeladern sind, ebenso wie alle anderen Abfangelemente 34, 35 und 36 sowie alle Führungselemente 20, 21, 22, 26 und 27 und die Ablagen 19 für die Spleiße, integraler Bestandteil des als Kunststoff-Spritzgussteil ausgeführten Verteilerfelds 11.

### Bezugszeichenliste

- 10: Lichtwellenleiterverteilereinrichtung
- 11: Verteilerfeld
- 12: Haltewinkel
- 13: Bodenwand
- 14: Seitenwand
- 15: Seitenwand
- 16: Seitenwand
- 17: Seitenwand
- 18: Öffnungen
- 19: Ablage
- 20: Führungselement
- 21: Führungselement
- 22: Führungselement
- 23: Überlängenspeicher
- 24: Ausnehmung
- 25: Zugabfangung
- 26: Führungselement
- 27: Führungselement
- 28: Überlängenspeicher
- 29: erster Funktionsbereich
- 30: zweiter Funktionsbereich
- 31: dritter Funktionsbereich
- 32: Durchführung
- 33: Durchführung
- 34: erstes Abfangelement
- 35: zweites Abfangelement
- 36: drittes Abfangelement
- 37: Befestigungsabschnitt
- 38: Keflarfaser
- 39: Kappe
- 40: Abfangelement

## Patentansprüche

1. Lichtwellenleiterverteilereinrichtung, insbesondere für einseitig mit Steckern vorkonfektionierte Lichtwellenleiter wie zum Beispiel Pigtails, mit einem Verteilerfeld (11) umfassend Kupplungen für die Stecker das vorkonfektionierten Lichtwellenleiter, Zugabfangungen (25) für mindestens ein in das Verteilerfeld einzuführendes Lichtwellenleiterkabel, Ablagen (19) für Spleiße zwischen den vorkonfektionierten Lichtwellenleitern und in dem oder jedem Lichtwellenleiterkabel geführten Lichtwellenleitern, sowie Führungselemente (20, 21, 22, 26, 27) für die vorkonfektionierten Lichtwellenleiter und die über das oder jedes Lichtwellenleiterkabel eingeführten Lichtwellenleiter, wobei die Kupplungen und/oder die Zugabfangungen (25) und/oder die Ablagen (19) und/oder die Führungselemente (20, 21, 22, 26, 27) integraler Bestandteil des als Spritzgussteil ausgeführten Verteilerfelds (11) sind, **dadurch gekennzeichnet, dass** die Zugabfangungen (25) und die Ablagen (19) und die Führungselemente (20, 21, 22, 26, 27) derart im Verteilerfeld (11) positioniert sind, dass das Verteilerfeld (11) mindestens drei räumlich voneinander getrennte Funktionsbereiche (29, 30, 31) aufweist, nämlich einen ersten Funktionsbereich (29) ausschließlich zur Einführung und Zugabfangung des oder jedes Lichtwellenleiterkabels in das Verteilerfeld (11), einen zweiten Funktionsbereich (30) ausschließlich zur Führung, der vorkonfektionierten Lichtwellenleiter an die Kupplungen für die Stecker derselben, und einen dritten Funktionsbereich (31) zur Führung der vorkonfektionierten Lichtwellenleiter sowie der über das oder jedes Kabel eingeführten Lichtwellenleiter im Bereich der Spleiße sowie zur Ablage der Spleiße, wobei zwischen dem ersten Funktionsbereich (29) und dem dritten Funktionsbereich (31) sowie zwischen dem zweiten Funktionsbereich (30) und dem dritten Funktionsbereich (31) Durchführungen (32, 33) für die Lichtwellenleiter ausgebildet sind, und wobei der dritte Funktionsbereich (31) getrennte Überlängenspeicher (23, 28) für die vorkonfektionierten Lichtwellenleiter und die über das oder jedes Lichtwellenleiterkabel eingeführten Lichtwellenleiter sowie getrennte Führungselemente (20. 26) zur Zuführung derselben in Richtung auf die Ablagen (19) für die Spleiße unter Einhaltung zulässiger Mindestbiegeradien aufweist, sodass die vorkonfektionierten Lichtwellenleiter sowie die über das oder jedes Lichtwellenleiterkabel eingeführten Lichtwellenleiter innerhalb des Verteilerfelds (11) kreuzungsfrei führbar sind.

2. Lichtwellenleiterverteilereinrichtung nach Anspruch 1, **dadurch gekennzeichnet, dass** erste Funktionsbereich (29) und der dritte Funktionsbereich (31) benachbart zu einer Rückseite des Verteilerfelds (11) und der zweite Funktionsbereich (30) benachbart zu einer Vorderseite des Verteilerfelds (11) positioniert sind bzw. ist.

3. Lichtwellenleiterverteilereinrichtung nach Anspruch 1 oder 2, **dadurch gekennzeichnet, dass** im Bereich der zwischen dem ersten Funktionsbereich (29) und dem dritten Funktionsbereich (31) ausgebildeten Durchführung (32) Abfangelemente (40) für Bündeladern von über das oder jedes Lichtwellenleiterkabel eingeführten Lichtwellenleitern ausgebildet sind, wobei die Abfangelemente (40) für die Bündeladern integraler Bestandteil des als Spritzgussteil ausgeführten Verteilerfelds (11) sind.

4. Lichtwellenleiterverteilereinrichtung nach einem oder mehreren der Ansprüche 1 bis 3, **dadurch gekennzeichnet, dass** die Zugabfangungen (25) und die Ablagen (19) und die Führungselemente (20, 21, 22, 26, 27) und gegebenenfalls die Kupplungen integraler Bestandteil des als Kunststoff-Spritzgussteil ausgeführten Verteilerfelds (11) sind.

5. Lichtwellenleiterverteilereinrichtung nach einem oder mehreren der Ansprüche 1 bis 4, **dadurch gekennzeichnet, dass** die Zugabfangungen (25) für ein in das Verteilerfeld (11) einzuführendes Lichtwellenleiterkabel erste Abfangelemente (34) für einen Kabelmantel, zweite Abfangelemente (35) für ein Zentralelement des oder jedes einzuführenden Lichtwellenleiterkabels und dritte Abfangelemente (36) für in den Kabelmantel eines einzuführenden Lichtwellenleiterkabels integrierte Zugelemente (38), insbesondere Zugfasern wie zum Beispiel Keflarfasern, umfassen.

6. Lichtwellenleiterverteilereinrichtung nach Anspruch 5, **dadurch gekennzeichnet, dass** die dritten Abfangelemente (36) für die in den Kabelmantel des einzuführenden Lichtwellenleiterkabels integrierten Zugelemente von einer Kappe (39) abdeckbar sind.

## Claims

1. Optical waveguide distribution device, in particular for optical waveguides which are prefabricated with plugs at one end, such as pigtails, having a distribution panel (11) comprising couplings for the plugs of the prefabricated optical waveguides, strain relief devices (25) for at least one optical waveguide cable which can be introduced into the distribution panel, receptacles (19) for splices between the prefabricated optical waveguides and optical waveguides guided in the or each optical waveguide cable, as well as guide elements (20, 21, 22, 26, 27) for the prefabricated optical waveguides and the optical waveguides which are introduced by the or each optical waveguide cable, with the couplings and/or the strain relief devices (25) and/or the receptacles (19) and/or the guide elements (20, 21, 22, 26, 27) being an integral component of the distribution panel (11), which is in the form of an injection-molded part, **characterized in that** the strain relief devices (25) and the receptacles (19) and the guide elements (20, 21, 22, 26, 27) are positioned in the distribution panel (11) in such a manner that the distribution panel (11) has at least three functional areas (29, 30, 31), which are physically separated from one another, specifically a first functional area (29) solely for introduction and strain relief for the or each optical waveguide cable into the distribution panel (11), a second functional area (30) solely for guidance of the prefabricated optical waveguides to the couplings for the plugs thereof, and a third functional area (31) for guidance of the prefabricated optical waveguides and of the optical waveguides which have been inserted via the or each cable, in the area of the splices, and for holding the splices, and with bushings (32, 33) for the optical waveguides being formed between the first functional area (29) and the third functional area (31), as well as between the second functional area (30) and the third functional area (31), and the third functional area (31) having separate excess-length storage means (23, 28) for the prefabricated optical waveguides and for the optical waveguides which have been inserted via the or each optical waveguide cable as well as separate guide elements (20, 26) for passing the same in direction of the receptacles (19) for the splices complying with the minimum permissible bending radii, so that the prefabricated optical waveguides and the optical waveguides which have been inserted via the or each optical waveguide cable are guided within the distribution panel (11) without crossing over.

2. Optical waveguide distribution device according to Claim 1, **characterized in that** the first functional area (29) and the third functional area (31) are positioned adjacent to a rear face of the distribution panel (11), and the second functional area (30) is positioned adjacent to a front face of the distribution panel (11).

3. Optical waveguide distribution device according to Claim 1 or 2, **characterized in that** holding elements (40) for bundled cores are formed by optical waveguides which have been inserted via the or each optical waveguide cable, in the area of the bushing (32) which is formed between the first functional area (29) and the third functional area (31), with the holding elements (40) being an integral component, for the bundled cores, of the distribution panel (11), which is in the form of an injection-molded part.

4. Optical waveguide distribution device according to one or more of Claims 1 to 3, **characterized in that** the strain relief devices (25) and the receptacles (19) and the guide elements (20, 21, 22, 26, 27) and, possibly, the couplings are an integral component of the distribution panel (11), which is in the form of a plastic injection-molded part.

5. Optical waveguide distribution device according to one or more of Claims 1 to 4, **characterized in that** the strain relief devices (25) for an optical waveguide cable which can be inserted into the distribution panel (11) comprise first holding elements (34) for a cable sheath and second holding elements (35) for a central element of the or each optical waveguide cable to be inserted, and third holding elements (36) for strain elements (38) which are integrated in the cable sheath of an optical waveguide cable to be inserted, in particular strain fibers such as Kevlar fibers.

6. Optical waveguide distribution device according to Claim 5, **characterized in that** the third holding elements (36) for the strain elements which are integrated in the cable sheath of the optical waveguide cable to be inserted can be covered by a cap (39).

## Revendications

1. Dispositif de distribution de fibres optiques, notamment pour les fibres optiques prééquipées de connecteurs à une extrémité comme par exemple les pigtails, avec un espace de distribution (11) comprenant des accouplements pour les connecteurs des fibres optiques prééquipées, des blocages contre la traction (25) pour au moins un câble de fibres optiques à introduire dans l'espace de distribution, des rangements (19) pour des épissures entre les fibres optiques prééquipées et les fibres optiques du ou de chaque câble de fibres optiques, ainsi que des éléments de guidage (20, 21, 22, 26, 27) pour les fibres optiques prééquipées et les fibres optiques introduites par l'intermédiaire du ou de chaque câble de fibres optiques, les accouplements et/ou les blocages contre la traction (25) et/ou les rangements (19) et/ou les éléments de guidage (20, 21, 22, 26, 27) étant partie intégrante de l'espace de distribution (11) réalisé d'une pièce par moulage par injection, **caractérisé en ce que** les blocages contre la traction (25) et les rangements (19) et les éléments de guidage (20, 21, 22, 26, 27) sont placés dans l'espace de distribution (11) de telle sorte que l'espace de distribution (11) offre au moins trois zones fonctionnelles (29, 30, 31) géométriquement séparées, en l'occurrence une première zone fonctionnelle (29) exclusivement pour l'introduction et le blocage contre la traction du ou de chaque câble de fibres optiques dans l'espace de distribution (11), une deuxième zone fonctionnelle (30) exclusivement pour le guidage des fibres optiques prééquipées vers les accouplements des connecteurs correspondants, et une troisième zone fonctionnelle (31) pour le guidage des fibres optiques prééquipées ainsi que des fibres optiques introduites par l'intermédiaire du ou de chaque câble dans la zone de l'épissure ainsi que pour le rangement de l'épissure, des traversées (32, 33) pour les fibres optiques étant réalisées entre la première zone fonctionnelle (29) et la troisième zone fonctionnelle (31) ainsi qu'entre la deuxième zone fonctionnelle (30) et la troisième zone fonctionnelle (31), et la troisième zone fonctionnelle (31) comportant des rangements séparés de longueurs résiduelles (23, 28) pour les fibres optiques prééquipées et pour les fibres optiques introduites par l'intermédiaire du ou de chaque câble de fibres optiques ainsi que des éléments de guidage séparés (20, 26) pour le guidage de celles-ci en direction des rangements (19) des épissures en respectant le rayon minimum de courbure admissible, de telle sorte que les fibres optiques prééquipées ainsi que les fibres optiques introduites par l'intermédiaire du ou de chaque câble de fibres optiques peuvent être guidées à l'intérieur de l'espace de distribution (11) sans croisement.

2. Dispositif de distribution de fibres optiques selon la revendication 1, **caractérisé en ce que** la première zone fonctionnelle (29) et la troisième zone fonctionnelle (31) sont placées au voisinage d'une face arrière de l'espace de distribution (11) et la deuxième zone fonctionnelle (30) au voisinage d'une face avant de l'espace de distribution (11).

3. Dispositif de distribution de fibres optiques selon la revendication 1 ou 2, **caractérisé en ce que** dans la zone réalisant la traversée (32) entre la première zone fonctionnelle (29) et la troisième zone fonctionnelle (31), sont réalisés des éléments de blocage (40) des faisceaux de fibres des fibres optiques introduites par l'intermédiaire du ou de chaque câble de fibres optiques, les éléments de blocage (40) des faisceaux de fibres étant partie intégrante de l'espace de distribution (11) réalisé d'une pièce par moulage par injection.

4. Dispositif de distribution de fibres optiques selon une ou plusieurs des revendications 1 à 3, **caractérisé en ce que** les blocages contre la traction (25) et les rangements (19) et les éléments de guidage (20, 21, 22, 26, 27) et éventuellement les accouplements sont partie intégrante de l'espace de distribution (11) réalisé d'une pièce par moulage par injection.

5. Dispositif de distribution de fibres optiques selon une ou plusieurs des revendications 1 à 4, **caractérisé en ce que** les blocages contre la traction (25) pour un câble de fibres optiques à introduire dans l'espace de distribution (11) comportent des premiers éléments de blocage (34) pour une gaine du câble, des deuxièmes éléments de blocage (35) pour un élément central du ou de chaque câble de fibres optiques à introduire, et des troisièmes éléments de blocage (36) pour des éléments de traction (38) intégrés dans la gaine d'un câble de fibres optiques à introduire, notamment des fibres de traction comme par exemple des fibres de Kevlar.

6. Dispositif de distribution de fibres optiques selon la revendication 5, **caractérisé en ce que** les troisièmes éléments de blocage (36) pour les éléments de traction intégrés dans la gaine du câble de fibres optiques à introduire, peuvent être recouverts par un capuchon (39).
